# EUROPEAN PATENT SPECIFICATION

(11) **EP 3 346 452 B1**
(45) Date of publication and mention of the grant of the patent: **23.08.2023**
(21) Application number: 18150421.8
(22) Date of filing: 05.01.2018
(51) Int. Cl.: G07C 5/00, B64D 45/00

(54) **AIRCRAFT CONDITION MONITORING SYSTEM**
FLUGZEUGZUSTANDSÜBERWACHUNGSSYSTEM
SYSTÈME DE SURVEILLANCE DE L'ÉTAT D'UN AÉRONEF

(30) Priority: 06.01.2017 US 201762443089 P
(43) Date of publication of application: 11.07.2018
(73) Proprietor: Rosemount Aerospace Inc., Burnsville, MN 55306-4898 (US)
(72) Inventor: HAUKOM, Michael James, Farmington, MN Minnesota 55024 (US)
(74) Representative: Dehns

(56) References cited:
- US-A1- 2003 003 872
- US-A1- 2012 191 273
- US-A1- 2014 203 952
- US-A1- 2015 279 125
- US-A1- 2016 075 443

## Description

### CROSS-REFERENCE TO RELATED APPLICATION(S)

This application claims the benefit of U.S. Provisional Application No. 62/443,089 filed January 6, 2016 for "AIRCRAFT CONDITION MONITORING SYSTEM" by Michael James Haukom.

### BACKGROUND

The present disclosure relates generally to aircraft condition monitoring systems, and more particularly to aircraft condition monitoring systems that utilize wireless data.

Many modern aircraft incorporate an aircraft condition monitoring system (ACMS) to monitor the status of onboard systems and equipment. Such ACMSs typically collect data from various system devices, sensors, and other equipment positioned about the aircraft to generate conditional reports based on the operational status of the onboard systems. ACMS reports are typically stored for later retrieval or transmitted to ground-based systems via Aircraft Communications Addressing and Reporting System (ACARS) networks. Such SATCOM and ACARS networks, while reliable and widely adopted, present various reporting challenges due to data transmission rates and maximum message sizes. In addition, conditional reporting based solely on aircraft system data originating from onboard system devices limits the available conditions for reporting to that data which is generated onboard the aircraft.

US 2012/191273 A1 discloses an automated aircraft flight data delivery and management system which operates in a normal state and a demand state. Data transmission increases in intensity when the system is in a demand state.

US 2016/075443 A1 discloses a flight data recorder which receives from an aircraft a data stream specifying values for flight data parameters while an aircraft is in flight.

### SUMMARY

According to the invention, a system as claimed in claim 1 is provided.

The system of the preceding paragraph can optionally include any one or more of the following features, configurations and/or additional components:

The first plurality of conditional expressions can further include a third conditional expression based upon user input received via a user interface device of the aircraft.

The first conditional algorithm can further include one or more attributes that specify an end of life action of the first conditional algorithm.

The end of life action can include one of a delete action that causes the first conditional algorithm instructions to be deleted from the computer-readable memory of the aircraft interface device and a dormant action that causes the aircraft interface device to refrain from executing the first conditional algorithm until receipt of an activation command.

The first triggered action can include transmitting a report. The report can include at least a portion of one or more of the aircraft system data and the remote data.

The computing device remote from the aircraft can include a ground-based computing device.

The aircraft data bus structure can include a plurality of aircraft data buses.

The first plurality of conditional expressions that are logically organized to define the trigger can be logically organized via a plurality of Boolean expressions to define the trigger that evaluates to a Boolean state during execution of the first conditional algorithm.

According to the invention, a method as claimed in claim 9 is also provided.

The method of the preceding paragraph can optionally include any one or more of the following features, configurations, operations, and/or additional components:
The first plurality of conditional expressions can further include a third conditional expression based upon user input received via a user interface device of the aircraft.

The first conditional algorithm can further include one or more attributes that specify an end of life action of the first conditional algorithm.

The end of life action can include one of a delete action that causes the first conditional algorithm instructions to be deleted from the computer-readable memory of the aircraft interface device and a dormant action that causes the aircraft interface device to refrain from executing the first conditional algorithm until receipt of an activation command.

The first triggered action can include transmitting a report. The report can include at least a portion of one or more of the aircraft system data and the remote data.

The computing device remote from the aircraft can include a ground-based computing device.

The aircraft data bus structure can include a plurality of aircraft data buses.

### BRIEF DESCRIPTION OF THE DRAWINGS

Preferred embodiments of the invention will now be described, by way of example only, and with reference to the accompanying drawings in which:
FIG. 1 is a block diagram illustrating an example aircraft condition monitoring system including an aircraft interface device that executes a conditional algorithm based on aircraft system data received via an aircraft data bus structure and remote data.
FIG. 2 is a block diagram illustrating an example conditional algorithm engine that executes a conditional algorithm to activate one or more triggered actions based on a plurality of conditional expressions.
FIG. 3 is a block diagram illustrating an example of the first conditional algorithm according to the invention including a plurality of conditional expressions that are logically organized to define a trigger that initiates a plurality of triggered actions.
FIG. 4 is a block diagram illustrating a second conditional algorithm in accordance with the claimed invention having the trigger of a FIG. 3 included as one of the three logically organized conditional expressions.

### DETAILED DESCRIPTION

As described herein, an aircraft interface device executes one or more conditional algorithms having a plurality of conditional expressions that are logically organized to define a trigger that initiates a triggered action, such as transmitting and/or storing one or more of an alert and an aircraft condition monitoring system report. The conditional expressions are based on both aircraft system data received from one or more aircraft system devices via an aircraft data bus structure and remote data that is wirelessly received. In certain examples, the conditional expressions can be further based on pilot, crew, or other user input. Remote data can originate from a remote (e.g., ground-based) computing device, such as a ground-based server or other device, as well as from aircraft system devices positioned on the aircraft that wirelessly transmit data to the aircraft interface device via wireless avionics intra-communication (WAIC) or other wireless communication networks. Techniques of this disclosure further enable the aircraft interface device to logically chain or otherwise group the conditional algorithms, such that satisfaction of a trigger of one conditional algorithm is a conditional input to another conditional algorithm that initiates one or more separate triggered actions. The aircraft interface device can therefore generate alerts, reports, or other triggered actions based not only upon data originating from aircraft system devices onboard the aircraft, but rather upon data received from multiple sources, such as ground-based sources, aircraft system devices positioned on the aircraft, and user (e.g., pilot, crew, or other user) input. Moreover, the ability of the aircraft interface device to send and receive data via multiple wired and wireless communication networks, including cellular communication networks, WiFi networks (e.g., Ethernet or other Internet-protocol networks), satellite communication (SATCOM) networks, Aircraft Communications Addressing and Reporting System (ACARS) networks, or other wireless communication networks increases the flexibility and usability of the aircraft interface device to generate value-added operational efficiency via reports, alerts, or other triggered actions.

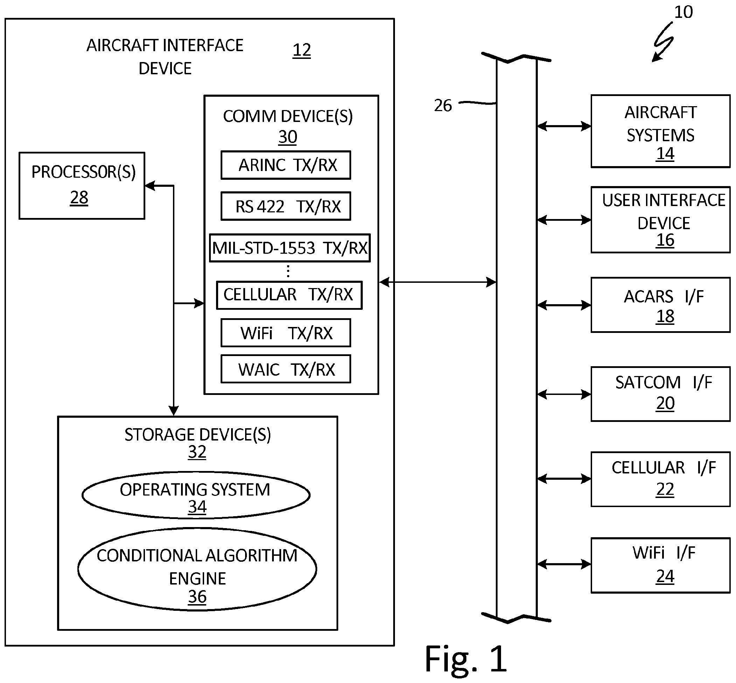

FIG. 1 is a block diagram illustrating aircraft condition monitoring system (ACMS) 10. As illustrated in FIG. 1, ACMS 10 includes aircraft interface device 12 that is communicatively coupled with aircraft systems 14, user interface device 16, ACARS interface 18, SATCOM interface 20, cellular communications interface 22, and WiFi communications interface 24 via aircraft data bus structure 26. Aircraft interface device 12 includes one or more processors 28, one or more communication devices 30, and one or more storage devices 32. One or more storage devices 32 include operating system 34 and conditional algorithm engine 36. While not directly illustrated, it should be understood that each of the components of ACMS 10 is configured to be positioned on an aircraft.

Aircraft systems 14 include aircraft avionics systems (e.g., flight management systems, flight control systems, air data systems, or other avionics systems), engine systems, landing gear systems, air conditioning systems, cockpit and/or cabin display systems, in-flight entertainment systems, or other aircraft systems. In some examples, aircraft systems 14 include data acquisition systems that collect data from various sensors and computing devices positioned throughout the aircraft to serve as centralized collection points for aircraft operational data that can be routed to and from various producing and consuming systems. In general, aircraft systems 14 include any aircraft system devices configured to send and/or receive data during operation of the aircraft, such as measured data of one or more components of the aircraft system devices, data derived from the measured data, or other data corresponding to operational characteristics of the aircraft.

User interface device 16 can be any device positioned on the aircraft that is configured to receive input from a user, such as flight crew, cabin crew, or other users. For instance, user interface device 16 can be a control display unit or other interface device positioned in the cockpit of the aircraft and having mechanical and/or graphical interface components for receiving user input and/or presenting information to various users.

ACARS interface 18, SATCOM interface 20, cellular communications interface 22, and WiFi communications interface 24 are wireless communication interfaces positioned on the aircraft and configured to send and receive wireless communications with remote computing devices, such as ground-based computed devices, computing devices positioned onboard other aircraft (e.g., aircraft traffic collision avoidance transponders), or other remote computing devices. Each of ACARS interface 18, SATCOM interface 20, cellular communications interface 22, and WiFi communications interface 24 can include separate or shared antennas or other transceivers positioned on the aircraft for sending and receiving wireless communications via the corresponding media and communication protocols. Communication via each of ACARS interface 18, SATCOM interface 20, cellular communications interface 22, and WiFi communications interface 24 can be managed by one or more communication systems including separate or shared communication controller devices that modulate data for transmission between aircraft data bus structure 26 and the various wireless communication protocols. Accordingly, while illustrated and described as separate components for purposes of clarity and ease of discussion, it should be understood that any one or more of ACARS interface 18, SATCOM interface 20, cellular communications interface 22, and WiFi communications interface 24 can be implemented as part of a shared communications system utilizing shared or separate system components.

ACARS interface 18 includes circuitry and other components for sending and receiving wireless data via very high frequency (VHF), high frequency (HF), AERO satellite, or other radio signals. SATCOM interface 20 includes circuitry and other components for sending and receiving wireless data via a series of communication satellites. In some examples, SATCOM interface 20 can send and receive data via the Ku band of frequencies ranging from 12-18 gigahertz (GHz), the Ka band of frequencies ranging from 26.5-40 GHz, the L-band frequency range from 1-2 GHz, and/or other frequency bands.

Cellular communications interface 22 includes circuitry and other components for sending and receiving cellular communications, e.g., Long-Term Evolution (LTE), third generation (3G), fourth generation (4G), or other cellular communications. WiFi communications interface 24 includes circuitry and other components for sending and receiving wireless communications via, e.g., Internet-protocol (IP) networks, such as Ethernet networks or other packet-switched networks or services (e.g., the SwiftBroadband service).

As illustrated in FIG. 1, each of aircraft systems 14, user interface device 16, ACARS interface 18, SATCOM interface 20, cellular communications interface 22, WiFi communications interface 24, and aircraft interface device 12 are interconnected via aircraft data bus structure 26. Aircraft data bus structure 26, though illustrated as a single data bus for purposes of clarity and ease of discussion, can include multiple data buses and/or other electrical interconnections (e.g., discrete input/output connections). For instance, aircraft data bus structure 26 can include any one or more wired communication data buses configured to send and receive data via various communication protocols, such as an Aeronautical Radio, Incorporated (ARINC) 429 data bus, ARINC 664 Part 7 data bus, an ARINC 717 data bus, an Avionics Full Duplex Switched Ethernet (AFDX) data bus, a RS-422 data bus, a RS-485 data bus, a MIL-STD-1553 data bus, a controller area network (CAN) data bus, or other data buses.

Aircraft interface device 12 includes one or more processors 28. Processors 28, in one example, are configured to implement functionality and/or process instructions for execution within aircraft interface device 12. For instance, processors 28 can be capable of processing instructions stored in storage devices 32. Examples of processors 28 can include any one or more of a microprocessor, a controller, a digital signal processor (DSP), an application specific integrated circuit (ASIC), a field-programmable gate array (FPGA), or other equivalent discrete or integrated logic circuitry.

As illustrated in FIG. 1, aircraft interface device 12 also includes one or more communication devices 30. Aircraft interface device 12 utilizes communication devices 30 to communicate with external devices via one or more networks, such as one or more wireless or wired networks, or both. As illustrated, communication devices 30 can include ARINC transceivers, RS-422 transceivers, MIL-STD-1553 transceivers, cellular communication transceivers, WiFi transceivers, WAIC transceivers, or other types of communication devices (e.g., AFDX transceivers, network interface cards, optical transceivers, Bluetooth transceivers) that can send and receive information.

One or more storage devices 32 can be configured to store information within aircraft interface device 12 during operation. Storage devices 32, in some examples, are described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, storage devices 32 are a temporary memory, meaning that a primary purpose of storage devices 32 is not long-term storage. Storage devices 32, in some examples, are described as volatile memory, meaning that storage devices 32 do not maintain stored contents when power to aircraft interface device 12 is removed. Examples of volatile memories can include random access memories (RAM), dynamic random access memories (DRAM), static random access memories (SRAM), and other forms of volatile memories. In some examples, storage devices 32 are used to store program instructions for execution by processors 28. Storage devices 32, in one example, are used by software or applications running on aircraft interface device 12 (e.g., conditional algorithm engine 36) to temporarily store information during program execution.

Storage devices 32, in some examples, also include one or more storage media. Storage devices 32 can be configured to store larger amounts of information than volatile memory. Storage devices 32 can further be configured for long-term storage of information. In some examples, storage devices 32 include non-volatile storage elements. Examples of such non-volatile storage elements can include magnetic hard discs, optical discs, flash memories, or forms of electrically programmable memories (EPROM) or electrically erasable and programmable (EEPROM) memories.

Storage devices 32, as illustrated in FIG. 1, include operating system 34 and conditional algorithm engine 36. Operating system 34 is executable by processors 28 to control operation of various components of aircraft interface device 12. For instance, operating system 34 can facilitate the communication of conditional algorithm engine 36 with communication devices 30.

Conditional algorithm engine 36, executing on processors 28, implements one or more conditional algorithms, each of the conditional algorithms including a plurality of conditional expressions that are logically organized to define a trigger that initiates one or more triggered actions, such as transmitting (e.g., via communication devices 30) and/or storing (e.g., at storage devices 32) one or more alerts and/or reports. As is further described below, conditional algorithm engine 36 executes one or more conditional algorithms having a first conditional expression based upon aircraft system data originating from one or more of aircraft systems 14 (received by aircraft interface device 12 via aircraft data bus structure 26), and a second conditional expression based upon remote data that is wirelessly received. The remote data can, in some examples, originate from a computing device that is remote from the aircraft, such as a ground-based server device or a computing device onboard a different aircraft (e.g., a traffic collision avoidance system of the remote aircraft). The remote data, in such examples, can be received by any one or more of ACARS interface 18, SATCOM interface 20, cellular communications interface 22, and WiFi communications interface 24, and transmitted to aircraft interface device 12 via aircraft data bus structure 26. Such remote data can include, e.g., ground-based maintenance or reporting requests, data routed through a ground-based server (e.g., weather radar data), or other ground-based data. In certain examples, the remote data can be received directly by a wireless transceiver of communication devices 30 (e.g., a cellular or WiFi transceiver of communication devices 30 included in aircraft interface device 12). In yet other examples, remote data can originate from one or more of aircraft systems 14 and can be wirelessly transmitted by aircraft systems 14 to aircraft interface device 12 via wireless avionics intra-communication (WAIC) or other wireless communications.

In operation, conditional algorithm engine 36 executes the one or more conditional algorithms and evaluates the plurality of conditional expressions to determine whether the corresponding trigger (i.e., defined by a logical grouping of the conditional expressions) is satisfied, as is further described below. Conditional algorithm engine 36, in response to determining that the trigger is satisfied, executes one or more corresponding triggered actions including, e.g., transmitting a report, storing a report, and/or transmitting an alert via communication devices 30. Reports and/or alerts, in some examples, include at least a portion of the received aircraft system data and remote data, thereby facilitating fault diagnostics, system health and usage monitoring, or other activities that may be undertaken based on the generated reports and alerts.

Aircraft interface device 12 can transmit the reports and/or alerts via communication devices 30 and aircraft data bus structure 26 to any one or more of aircraft systems 14. In addition, aircraft interface device 12 can transmit the reports and/or alerts to a remote computing device (e.g., a ground-based computing device) via wireless transceiver(s) of communication devices 30 or via aircraft data bus structure 26 and ACARS interface 18, SATCOM interface 20, cellular communications interface 22, and/or WiFi communications interface 24.

Accordingly, rather than implement conditional reporting based solely on aircraft system data originating from aircraft systems 14, conditional algorithm engine 36 executes conditional algorithms having conditional expressions based also on remote data (e.g., information and/or requests) that can be received from remote (e.g., ground-based) systems, thereby increasing flexibility of report and alert generation. Moreover, transmission of reports and alerts via multiple wireless communication channels, such as cellular and WiFi communications, can enable increased data transmission rates as compared with traditional ACARS and SATCOM communications. As such, aircraft interface device 12 implementing techniques of this disclosure can provide more detailed and lengthy reports over shorter durations of time, thereby further facilitating usability of aircraft interface device 12 to generate value-added operational efficiency via the corresponding reported information.

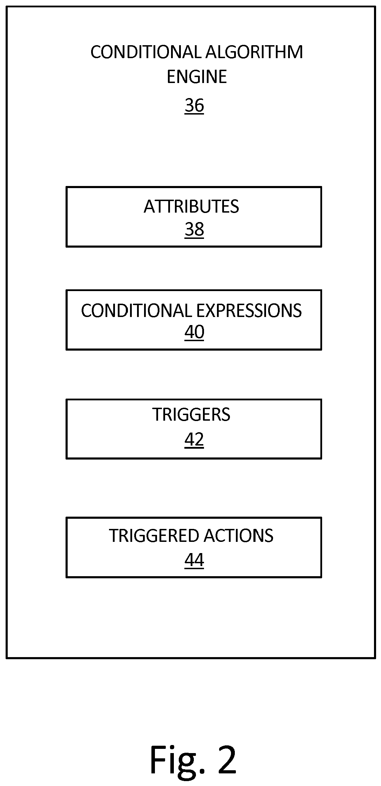

FIG. 2 is a block diagram of conditional algorithm engine 36. Conditional algorithm engine 36 executes one or more conditional algorithms that each utilize attributes 38, conditional expressions 40, triggers 42, and triggered actions 44. Attributes 38 define parameters that control operational characteristics of each conditional algorithm. Attributes 38, in some examples, specify activation parameters of one or more of the conditional algorithms. Activation parameters can define, e.g., a time duration for execution of a corresponding conditional algorithm, a duration for execution of the conditional algorithm corresponding to a number of times that an associated trigger is satisfied, a starting time of execution of the conditional algorithm, an ending time of execution of the conditional algorithm, or other activation parameters. Attributes 38, in certain examples, specify an end of life action of a corresponding conditional algorithm. For instance, end of life actions can include a delete action that causes the conditional algorithm to be deleted or otherwise removed from computer-readable memory (or active memory, such as RAM or cache) of aircraft interface device 12 by, e.g., operating system 34 (FIG. 1). In some examples, end of life actions can include a dormant action that halts execution of the corresponding conditional algorithm until, e.g., receipt of an activation command from a ground-based message, pilot input, or other activation command.

Conditional expressions 40 include conditional (e.g., Boolean) statements based on input parameters corresponding to aircraft system data received from aircraft systems 14 (FIG. 1) and remote data received from, e.g., a ground-based or other remote computing device via wireless communications. For instance, conditional expressions 40 can utilize Boolean operators, such as the equality operator (=), the inequality operator (!=), the greater than operator (>), the greater than or equal to operator (>=), the less than operator (<), and the less than or equal to operator (<=), such that each conditional expression evaluates to a Boolean state (i.e., one of a true state and a false state).

Triggers 42 are formed by logical organizations (or groupings) of conditional expressions 40. For example, conditional expressions 40 can be logically organized via Boolean operators, such as the conjunctive operator (i.e., a logical AND operator), the disjunctive operator (i.e., a logical OR operator), the exclusive disjunctive operator (i.e., a logical exclusive OR operator), or other Boolean operators, such that each of triggers 42 evaluates to a Boolean state (i.e., true or false) during execution of the conditional algorithm.

Triggered actions 44 include resulting actions triggered by conditional algorithm engine 36 in response to satisfaction of a corresponding trigger (i.e., evaluation of the trigger to a Boolean state of true). Each conditional algorithm can include one or more corresponding triggered actions 44. Examples of triggered actions 44 include, but are not limited to, transmitting an alert, transmitting a report, and storing a report at storage devices 32.

In operation, conditional algorithm engine 36 executes one or more conditional algorithms, the operational characteristics of each conditional algorithm (e.g., activation characteristics and/or end of life characteristics) defined by a corresponding set of attributes 38. Conditional algorithm engine 36 evaluates those of conditional expressions 40 that are associated with the respective conditional algorithm and determines whether the corresponding one of triggers 42 defined by the logical grouping of conditional expressions 40 is satisfied (i.e., evaluates to a Boolean state of true). In response to determining that the corresponding trigger is satisfied, conditional algorithm engine 36 executes triggered actions 44 that are associated with the respective conditional algorithm.

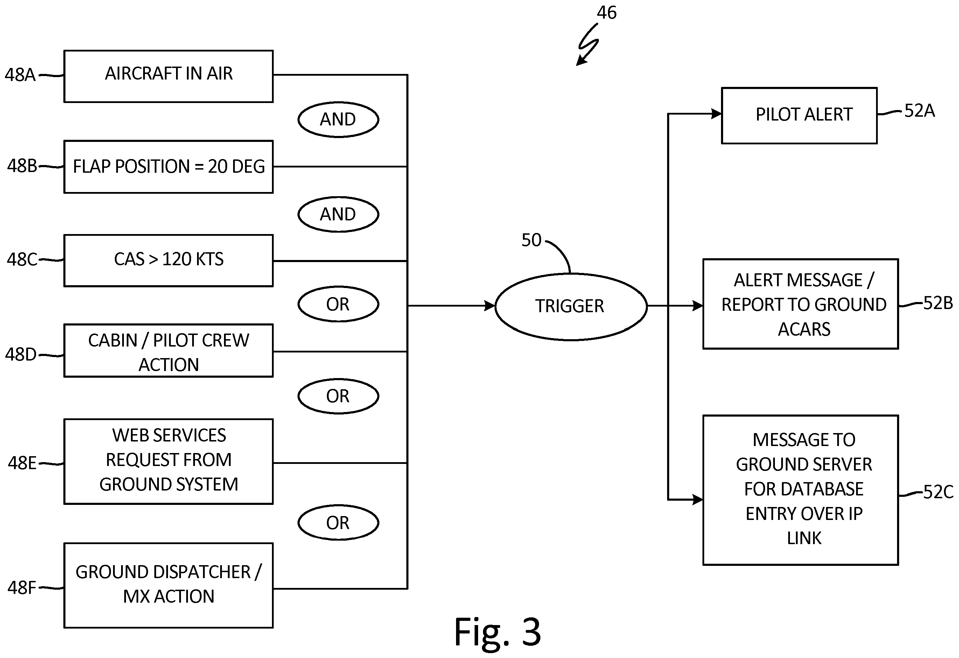

FIG. 3 is a block diagram illustrating example conditional algorithm 46 that includes conditional expressions 48A, 48B, 48C, 48D, 48E, and 48F that are logically organized to define trigger 50, satisfaction of which initiates triggered actions 52A, 52B, and 52C. As illustrated in FIG. 3, each of conditional expressions 48A-48F evaluates to a Boolean state during execution of conditional algorithm 46. While conditional algorithm 46 is illustrated and described as including six conditional expressions (i.e., conditional expressions 48A-48F) and three triggered actions (i.e., triggered actions 52A, 52B, and 52C), conditional algorithms executed by conditional algorithm engine 36 (FIGS. 1 and 2) can include more or fewer than six conditional expressions and more or fewer than three triggered actions.

Conditional expressions 48A-48F are logically organized via Boolean operators (i.e., Boolean AND and Boolean OR operators) to define trigger 50. That is, in the example of FIG. 3, conditional expressions 48 are logically organized via the Boolean operators such that trigger 50 is satisfied (i.e., evaluates to a Boolean state of true) when each of conditional expression 48A, 48B, and 48C evaluate to a Boolean state of true, or any of conditional expressions 48D, 48E, or 48F evaluate to a Boolean state of true. Each of conditional expressions 48A, 48B, and 48C are based on aircraft system data received from aircraft systems 14. Conditional expression 48D is based on user input data received from user interface device 16. Conditional expressions 48E and 48F are based on remote data originating from a computing device remote from the aircraft (i.e., a ground-based computing device in this example).

Conditional algorithm engine 36, during execution of conditional algorithm 46, determines whether trigger 50 is satisfied based on evaluation of the logical organization of conditional expressions 48A-48F. In response to determining that trigger 50 is satisfied, conditional algorithm 36 executes triggered actions 52A, 52B, and 52C. As illustrated, triggered action 52A includes transmitting a pilot alert (e.g., to a display system or other indication system of the aircraft cockpit), though in other examples, an alert can be generated and transmitted to cabin crew, Air Marshals onboard for a security alert, or to any other device and/or entity. Triggered action 52B includes transmitting an alert message to a ground-based computing device via ACARS interface 18 (FIG. 1). Triggered action 52C includes transmitting a message (e.g., including one or more of an alert and a report) to a ground-based server over an IP communication link via one or more of a WiFi communications transceiver of communication devices 30 (FIG. 1) and WiFi communications interface 24 (FIG. 1).

Accordingly, conditional algorithm engine 36, executing conditional algorithm 46, utilizes conditional expressions 48A-48F that are based on aircraft system data received from aircraft systems 14 (i.e., conditional expressions 48A-48C), user input data received via user interface device 16 (i.e., conditional expression 48D), and remote data received via wireless communications from a computing device that is remote from the aircraft (i.e., conditional expressions 48E and 48F). As such, rather than initiate triggered actions 52A-52C based solely on aircraft system data received from aircraft systems 14, conditional algorithm 46 enables execution of triggered actions 52A-52C based on pilot, crew, or other user input, as well as remote data (e.g., web services requests and ground dispatcher or maintenance action requests) received from a remote (e.g., ground-based) computing device, thereby increasing flexibility of report and alert generation. Moreover, transmission of reports and alerts via multiple communication channels (i.e., pilot alerts via a display or other indication system of the aircraft cockpit, alert messages via ACARS communications, and message data via WiFi communications) enables increased flexibility of reporting as compared with traditional ACARS and SATCOM communications.

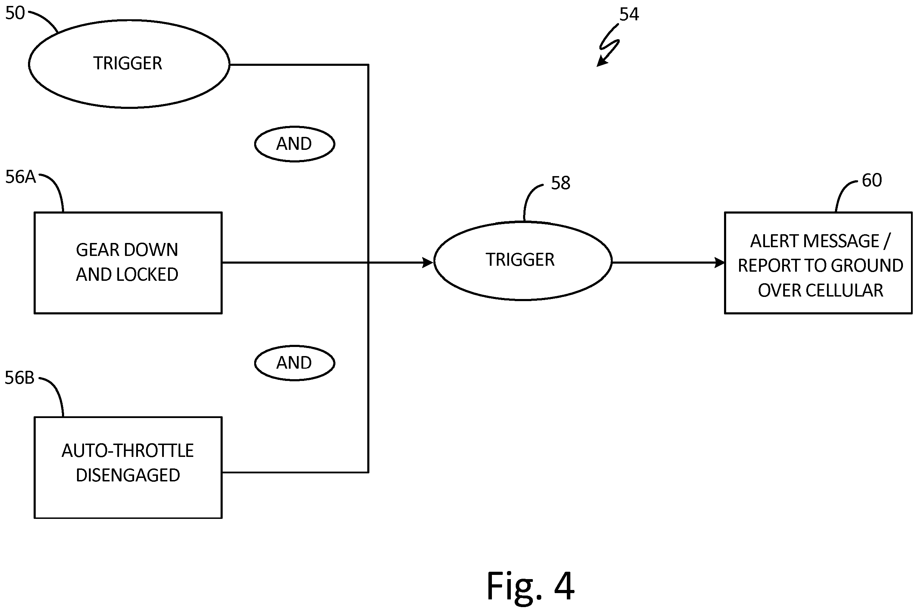

FIG. 4 is a block diagram illustrating a second conditional algorithm 54 in accordance with the claimed invention including trigger 50 of FIG. 3 as one of the three conditional expressions. That is, in FIG. 4, conditional algorithm 54 includes conditional expressions 56A and 56B. In addition, trigger 50 of FIG. 3 is included as a conditional expression of conditional algorithm 54. Each of trigger 50 and conditional expressions 56A and 56B are logically organized via Boolean AND operators to define trigger 58, satisfaction of which initiates triggered action 60. As such, in FIG. 4 conditional algorithm 46 (FIG. 3) and conditional algorithm 54 are logically chained, such that satisfaction of trigger 50 based on the logical organization of conditional expressions 48A-48F (FIG. 3) is a condition for satisfaction of trigger 58. In this way, techniques of this disclosure can enable logical chaining of any two or more conditional algorithms, thereby further increasing flexibility of reporting and ease of conditional algorithm generation.

Aircraft interface device 12, implementing techniques described herein, generates alerts, reports, and/or other triggered actions based not only upon data originating from aircraft system devices onboard the aircraft, but rather upon data received from multiple sources, such as ground-based sources, aircraft system devices positioned on the aircraft, and user (e.g., pilot, crew, or other user) input. The ability of aircraft interface device 12 to send and receive data via multiple wired and wireless communication networks increases the flexibility and usability of aircraft interface device 12 to generate value-added operational efficiency via the reports, alerts, or other triggered actions.

While the invention has been described with reference to an exemplary embodiment(s), it is intended that the invention not be limited to the particular embodiment(s) disclosed, but that the invention will include all embodiments falling within the scope of the appended claims.

## Claims

1. A system (10) comprising:
an aircraft data bus structure (26) that communicatively connects a plurality of aircraft system devices installed on an aircraft;
a wireless transceiver installed on the aircraft that communicatively connects at least one of the aircraft system devices with a computing device remote from the aircraft;
an aircraft interface device (12) installed on the aircraft, the aircraft interface device (12) including:
one or more communication devices (30) configured to send and receive data via the aircraft data bus structure (26);
one or more processors (28); and
computer-readable memory encoded with instructions that, when executed by the one or more processors (28), cause the aircraft interface device (12) to:
receive, via the one or more communication devices (30) over the aircraft data bus structure (26), aircraft system data corresponding to operational characteristics of the aircraft, the aircraft system data originating from one or more of the aircraft system devices and including measured data of one or more components of the one or more aircraft system devices;
receive, via the one or more communication devices (30) over the aircraft data bus structure (26), remote data originating from the computing device remote from the aircraft and received by the wireless transceiver installed on the aircraft;
execute a first conditional algorithm that includes a first plurality of conditional expressions (48A) that are logically organized to define a first trigger (50) that initiates a first triggered action (52A), the first plurality of conditional expressions including a first conditional expression (48A-48C) based upon the aircraft system data originating from the one or more aircraft system devices and a second conditional expression (48E, 48F) based upon the remote data originating from the computing device remote from the aircraft;
determine, during execution of the first conditional algorithm, that the first trigger (50) is satisfied;
execute, in response to determining that the first trigger is satisfied, the first triggered action, wherein the first triggered action includes at least one of transmitting an alert, transmitting a report, and storing a report; and
execute a second conditional algorithm (54) that includes three conditional
expressions:
1: that the gear is down and locked (56A);
2: that the auto-throttle is disengaged (56B); and
3: that the first trigger (50) is satisfied,
said three conditional expressions (56A, 56B and 50) being organized via Boolean AND-operator to define a second trigger (58), the satisfaction of which initiates a second triggered action (60), said second triggered action (60) being to transmit an alert message or/and a report to a ground-based computing device over cellular communications.

2. The system of claim 1,
wherein the first plurality of conditional expressions further includes a third conditional expression (48D) based upon user input received via a user interface device (16) of the aircraft.

3. The system of any preceding claim,
wherein the first conditional algorithm further includes one or more attributes that specify an end of life action of the first conditional algorithm.

4. The system of claim 3, wherein the end of life action includes one of a delete action that causes the first conditional algorithm instructions to be deleted from the computer-readable memory of the aircraft interface device (12) and a dormant action that causes the aircraft interface device (12) to refrain from executing the first conditional algorithm until receipt of an activation command.

5. The system of any preceding claim,
wherein the triggered action comprises transmitting a report; and
wherein the report comprises at least a portion of one or more of the aircraft system data and the remote data.

6. The system of any preceding claim,
wherein the computing device remote from the aircraft comprises a ground-based computing device.

7. The system of any preceding claim,
wherein the aircraft data bus structure (26) comprises a plurality of aircraft data buses.

8. The system of any preceding claim, wherein the first plurality of conditional expressions that are logically organized to define the trigger are logically organized via a plurality of Boolean expressions to define the trigger that evaluates to a Boolean state during execution of the first conditional algorithm.

9. A method comprising:
receiving, by an aircraft interface device (12) installed on an aircraft via a data bus structure (26) of the aircraft, aircraft system data corresponding to operational characteristics of the aircraft, the aircraft system data originating from one or more aircraft system devices positioned on the aircraft and including measured data of one or more components of the one or more aircraft system devices;
receiving, by the aircraft interface device (12) via the data bus structure (26) of the aircraft, remote data originating from one or more computing devices remote from the aircraft and received at the aircraft via one or more wireless communication networks;
executing, by the aircraft interface device (12), a first conditional algorithm that includes a first plurality of conditional expressions that are logically organized to define a first trigger (50) that initiates a first triggered action (52A), the first plurality of conditional expressions including a first conditional expression (48A-48C) based upon the aircraft system data originating from the one or more aircraft system devices and a second conditional expression (48E-48F) based upon the remote data originating from the one or more computing devices remote from the aircraft;
determining, by the aircraft interface device (12) during execution of the first conditional algorithm, that the first trigger (50) is satisfied;
executing, by the aircraft interface device (12) in response to determining that the first trigger (50) is satisfied, the first triggered action, wherein the first triggered action includes at least one of transmitting an alert, transmitting a report, and storing a report; and
executing, by the aircraft interface device (12), a second conditional algorithm (54) that includes three conditional expressions:
1: that the gear is down and locked (56A);
2: that the auto-throttle is disengaged (56B); and
3: that the first trigger (50) is satisfied,
said three conditional expressions (56A, 56B and 50) being organized via Boolean AND-operator to define a second trigger (58), the satisfaction of which initiates a second triggered action (60), said second triggered action (60) being to transmit an alert message or/and a report to a ground-based computing device over cellular communications.

10. The method of claim 9,
wherein the first plurality of conditional expressions further includes a third conditional expression (48D) based upon user input received via a user interface device (16) of the aircraft.

11. The method of claim 9 or 10,
wherein the first conditional algorithm further includes one or more attributes that specify an end of life action of the first conditional algorithm,
wherein the end of life action includes one of a delete action that causes the first conditional algorithm instructions to be deleted from the computer-readable memory of the aircraft interface device (12) and a dormant action that causes the aircraft interface device (12) to refrain from executing the first conditional algorithm until receipt of an activation command.

## Patentansprüche

1. System (10), umfassend:
eine Flugzeugdatenbusstruktur (26), die eine Vielzahl von in einem Flugzeug installierten Flugzeugsystemvorrichtungen kommunikativ verbindet;
einen im Flugzeug installierten drahtlosen Sendeempfänger, der mindestens eine der Flugzeugsystemvorrichtungen mit einer vom Flugzeug entfernten Computervorrichtung kommunikativ verbindet;
eine Flugzeugschnittstellenvorrichtung (12), die im Flugzeug installiert ist, wobei die Flugzeugschnittstellenvorrichtung (12) Folgendes beinhaltet:
eine oder mehrere Kommunikationsvorrichtungen (30), die zum Senden und Empfangen von Daten über die Flugzeugdatenbusstruktur (26) konfiguriert sind;
einen oder mehrere Prozessoren (28); und
computerlesbaren Speicher, der mit Anweisungen codiert ist, die, wenn sie von dem einen oder den mehreren Prozessoren (28) ausgeführt werden, die Flugzeugschnittstellenvorrichtung (12) dazu veranlassen:
über die eine oder die mehreren Kommunikationsvorrichtungen (30) über die Flugzeugdatenbusstruktur (26) Flugzeugsystemdaten zu empfangen, die den Betriebseigenschaften des Flugzeugs entsprechen, wobei die Flugzeugsystemdaten von einem oder mehreren der Flugzeugsystemvorrichtungen stammen und gemessene Daten einer oder mehrerer Komponenten der einen oder mehreren Flugzeugsystemvorrichtungen beinhalten;
über die eine oder die mehreren Kommunikationsvorrichtungen (30) über die Flugzeugdatenbusstruktur (26) Ferndaten zu empfangen, die von der vom Flugzeug entfernten Rechenvorrichtung stammen und von dem im Flugzeug installierten drahtlosen Sendeempfänger empfangen werden;
einen ersten bedingten Algorithmus auszuführen, der eine erste Vielzahl von bedingten Ausdrücken (48A) beinhaltet, die logisch organisiert sind, um einen ersten Auslöser (50) zu definieren, der eine erste ausgelöste Handlung (52A) initiiert, wobei die erste Vielzahl von bedingten Ausdrücken einen ersten bedingten Ausdruck enthält (48A-48C) basierend auf den Flugzeugsystemdaten, die von der einen oder den mehreren Flugzeugsystemvorrichtungen stammen, und einem zweiten bedingten Ausdruck (48E, 48F) basierend auf den Ferndaten, die von der vom Flugzeug entfernten Rechenvorrichtung stammen, beinhaltet;
während der Ausführung des ersten bedingten Algorithmus festzustellen, dass der erste Auslöser (50) erfüllt ist;
als Reaktion auf die Feststellung, dass der erste Auslöser erfüllt ist, die erste ausgelöste Handlung auszuführen, wobei die erste ausgelöste Handlung mindestens eines beinhaltet von Senden einer Warnmeldung, Senden eines Berichts und Speichern eines Berichts; und
einen zweiten bedingten Algorithmus (54) auszuführen, der drei bedingte Ausdrücke beinhaltet:
1: dass der Gang eingelegt und verriegelt ist (56A);
2: dass die automatische Schubkontrolle ausgeschaltet ist (56B); und
3: dass der erste Auslöser (50) erfüllt ist,
wobei die drei bedingten Ausdrücke (56A, 56B und 50) über einen booleschen UND-Operator organisiert sind, um einen zweiten Auslöser (58) zu definieren, dessen Erfüllung eine zweite ausgelöste Handlung (60) auslöst, wobei die zweite ausgelöste Handlung (60) das Senden einer Warnmeldung und/oder eines Berichts an eine bodengestützte Rechenvorrichtung über Mobilfunk-Kommunikation ist.

2. System nach Anspruch 1,
wobei die erste Vielzahl von bedingten Ausdrücken ferner einen dritten bedingten Ausdruck (48D) beinhaltet, der auf Benutzereingaben basiert, die über eine Benutzerschnittstellenvorrichtung (16) des Flugzeugs empfangen werden.

3. System nach einem der vorhergehenden Ansprüche,
wobei der erste bedingte Algorithmus ferner ein oder mehrere Attribute beinhaltet, die eine End-of-Life-Handlung des ersten bedingten Algorithmus angeben.

4. System nach Anspruch 3, wobei die End-of-Life-Handlung eine von einer Löschhandlung, die veranlasst, dass die Anweisungen des ersten bedingten Algorithmus aus dem computerlesbaren Speicher der Flugzeugschnittstellenvorrichtung (12) gelöscht werden, und einer inaktiven Handlung beinhaltet, die die Flugzeugschnittstellenvorrichtung (12) veranlasst, die Ausführung des ersten bedingten Algorithmus bis zum Empfang eines Aktivierungsbefehls zu unterlassen.

5. System nach einem der vorhergehenden Ansprüche,
wobei die ausgelöste Handlung Senden eines Berichts umfasst; und wobei der Bericht mindestens einen Abschnitt von einem oder mehreren der Flugzeugsystemdaten und der Ferndaten umfasst.

6. System nach einem der vorhergehenden Ansprüche,
wobei die vom Flugzeug entfernte Rechenvorrichtung eine bodengestützte Rechenvorrichtung umfasst.

7. System nach einem der vorhergehenden Ansprüche,
wobei die Flugzeugdatenbusstruktur (26) eine Vielzahl von Flugzeugdatenbussen umfasst.

8. System nach einem der vorhergehenden Ansprüche, wobei die erste Vielzahl von bedingten Ausdrücken, die logisch organisiert sind, um den Auslöser zu definieren, über eine Vielzahl von booleschen Ausdrücken logisch organisiert ist, um den Auslöser zu definieren, der während der Ausführung des ersten bedingten Algorithmus zu einem booleschen Zustand ausgewertet wird.

9. Verfahren, umfassend:
Empfangen durch eine in einem Flugzeug installierte Flugzeugschnittstellenvorrichtung (12) über eine Datenbusstruktur (26) des Flugzeugs von Flugzeugsystemdaten, die Betriebseigenschaften des Flugzeugs entsprechen, wobei die Flugzeugsystemdaten von einem oder mehreren am Flugzeug positionierten Flugzeugsystemvorrichtungen stammen und gemessene Daten einer oder mehrerer Komponenten der einen oder mehreren Flugzeugsystemvorrichtungen beinhalten;
Empfangen durch die Flugzeugschnittstellenvorrichtung (12) über die Datenbusstruktur (26) des Flugzeugs von Ferndaten, die von einem oder mehreren vom Flugzeug entfernten Rechenvorrichtungen stammen und am Flugzeug über ein oder mehrere drahtlose Kommunikationsnetzwerke empfangen werden;
Ausführen durch die Flugzeugschnittstellenvorrichtung (12) eines ersten bedingten Algorithmus, der eine erste Vielzahl von bedingten Ausdrücken beinhaltet, die logisch organisiert sind, um einen ersten Auslöser (50) zu definieren, der eine erste ausgelöste Handlung (52A) initiiert, wobei die erste Vielzahl von bedingten Ausdrücken einen ersten bedingten Ausdruck (48A-48C), der auf den Flugzeugsystemdaten basiert, die von der einen oder den mehreren Flugzeugsystemvorrichtungen stammen, und einem zweiten bedingten Ausdruck (48E-48F) beinhaltet, der auf den Ferndaten basiert, die von der einen oder den mehreren vom Flugzeug entfernten Rechenvorrichtung stammen;
Feststellen durch die Flugzeugschnittstellenvorrichtung (12) während der Ausführung des ersten bedingten Algorithmus, dass der erste Auslöser (50) erfüllt ist;
Ausführen durch die Flugzeugschnittstellenvorrichtung (12) der ersten ausgelösten Handlung als Reaktion auf die Feststellung, dass der erste Auslöser (50) erfüllt ist, wobei die erste ausgelöste Handlung mindestens eines beinhaltet von Senden einer Warnmeldung, Senden eines Berichts und Speichern eines Berichts; und
Ausführen durch die Flugzeugschnittstellenvorrichtung (12) eines zweiten bedingten Algorithmus (54), der drei bedingte Ausdrücke beinhaltet:
1: dass der Gang eingelegt und verriegelt ist (56A);
2: dass die automatische Schubkontrolle ausgeschaltet ist (56B); und
3: dass der erste Auslöser (50) erfüllt ist,
wobei die drei bedingten Ausdrücke (56A, 56B und 50) über einen booleschen UND-Operator organisiert sind, um einen zweiten Auslöser (58) zu definieren, dessen Erfüllung eine zweite ausgelöste Handlung (60) auslöst, wobei die zweite ausgelöste Handlung (60) das Senden einer Warnmeldung und/oder eines Berichts an eine bodengestützte Rechenvorrichtung über Mobilfunk-Kommunikation ist.

10. Verfahren nach Anspruch 9,
wobei die erste Vielzahl von bedingten Ausdrücken ferner einen dritten bedingten Ausdruck (48D) beinhaltet, der auf Benutzereingaben basiert, die über eine Benutzerschnittstellenvorrichtung (16) des Flugzeugs empfangen werden.

11. Verfahren nach Anspruch 9 oder 10,
wobei der erste bedingte Algorithmus ferner ein oder mehrere Attribute beinhaltet, die eine End-of-Life-Handlung des ersten bedingten Algorithmus angeben,
wobei die End-of-Life-Handlung eine von einer Löschhandlung, die veranlasst, dass die Anweisungen des ersten bedingten Algorithmus aus dem computerlesbaren Speicher der Flugzeugschnittstellenvorrichtung (12) gelöscht werden, und einer inaktiven Handlung beinhaltet, die die Flugzeugschnittstellenvorrichtung (12) veranlasst, die Ausführung des ersten bedingten Algorithmus bis zum Empfang eines Aktivierungsbefehls zu unterlassen.

## Revendications

1. Système (10) comprenant :
une structure de bus de données d'aéronef (26) qui connecte en communication une pluralité de dispositifs de système d'aéronef installés sur un aéronef ;
un émetteur-récepteur sans fil installé sur l'aéronef qui connecte en communication au moins un parmi les dispositifs de système d'aéronef à un dispositif informatique éloigné de l'aéronef ;
un dispositif d'interface d'aéronef (12) installé sur l'aéronef, le dispositif d'interface d'aéronef (12) comprenant :
un ou plusieurs dispositifs de communication (30) configurés pour envoyer et recevoir des données par le biais de la structure de bus de données d'aéronef (26) ;
un ou plusieurs processeurs (28) ; et
une mémoire lisible par ordinateur codée avec des instructions qui, lorsqu'elles sont exécutées par l'un ou les plusieurs processeurs (28), amènent le dispositif d'interface d'aéronef (12) à :
recevoir, par le biais de l'un ou les plusieurs dispositifs de communication (30) sur la structure de bus de données d'aéronef (26), des données de système d'aéronef correspondant à des caractéristiques opérationnelles de l'aéronef, les données de système d'aéronef provenant d'un ou plusieurs dispositifs de système d'aéronef et comprenant des mesures de données d'un ou plusieurs composants de l'un ou les plusieurs dispositifs de système d'aéronef ;
recevoir, par le biais de l'un ou les plusieurs dispositifs de communication (30) sur la structure de bus de données d'aéronef (26), des données distantes provenant du dispositif informatique distant de l'aéronef et reçues par l'émetteur-récepteur sans fil installé sur l'aéronef ;
exécuter un premier algorithme conditionnel qui comprend une première pluralité d'expressions conditionnelles (48A) qui sont logiquement organisées pour définir un premier déclencheur (50) qui déclenche une première action déclenchée (52A), la première pluralité d'expressions conditionnelles comprenant une première expression conditionnelle (48A-48C) basée sur des données de système d'aéronef provenant de l'un ou les plusieurs dispositifs de système d'aéronef et une seconde expression conditionnelle (48E, 48F) basée sur des données distantes provenant du dispositif informatique distant de l'aéronef ;
déterminer, lors de l'exécution du premier algorithme conditionnel, que le premier déclencheur (50) est satisfait ;
exécuter, en réponse à la détermination que le premier déclencheur est satisfait, la première action déclenchée, la première action déclenchée comprenant au moins un parmi la transmission d'une alerte, la transmission d'un rapport et le stockage d'un rapport ; et
exécuter un second algorithme conditionnel (54) qui comprend trois expressions conditionnelles :
1 : que le train est sorti et verrouillé (56A) ;
2 : que l'auto-manette est débrayée (56B) ; et
3 : que le premier déclencheur (50) est satisfait,
lesdites trois expressions conditionnelles (56A, 56B et 50) étant organisées par le biais d'un opérateur booléen ET pour définir un second déclencheur (58), dont la satisfaction déclenche une seconde action déclenchée (60), ladite seconde action déclenchée (60) étant de transmettre un message d'alerte ou/et un rapport à un dispositif informatique au sol par le biais de communications cellulaires.

2. Système selon la revendication 1,
dans lequel la première pluralité d'expressions conditionnelles comprend en outre une troisième expression conditionnelle (48D) basée sur une saisie d'utilisateur reçue par le biais d'un dispositif d'interface utilisateur (16) de l'aéronef.

3. Système selon l'une quelconque des revendications précédentes,
dans lequel le premier algorithme conditionnel comprend en outre un ou plusieurs attributs qui spécifient une action de fin de vie du premier algorithme conditionnel.

4. Système selon la revendication 3, dans lequel l'action de fin de vie comprend une parmi une action de suppression qui provoque la suppression des premières instructions d'algorithme conditionnel de la mémoire lisible par ordinateur du dispositif d'interface d'aéronef (12) et une action dormante qui amène le dispositif d'interface d'aéronef (12) à s'abstenir d'exécuter le premier algorithme conditionnel jusqu'à réception d'un ordre d'activation.

5. Système selon l'une quelconque des revendications précédentes,
dans lequel l'action déclenchée comprend la transmission d'un rapport ; et
dans lequel le rapport comprend au moins une partie d'une ou plusieurs parmi les données du système d'aéronef et des données distantes.

6. Système selon l'une quelconque des revendications précédentes,
dans lequel le dispositif informatique distant de l'aéronef comprend un dispositif informatique au sol.

7. Système selon l'une quelconque des revendications précédentes,
dans lequel la structure de bus de données d'aéronef (26) comprend une pluralité de bus de données d'aéronef.

8. Système selon l'une quelconque des revendications précédentes, dans lequel la première pluralité d'expressions conditionnelles qui sont logiquement organisées pour définir le déclencheur sont logiquement organisées par le biais d'une pluralité d'expressions booléennes pour définir le déclencheur qui s'évalue à un état booléen lors de l'exécution du premier algorithme conditionnel.

9. Procédé comprenant :
la réception, par un dispositif d'interface d'aéronef (12) installé sur un aéronef par le biais d'une structure de bus de données (26) d'aéronef, des données de système d'aéronef correspondant à des caractéristiques opérationnelles de l'aéronef, les données de système d'aéronef provenant d'un ou plusieurs dispositifs de système d'aéronef positionnés sur l'aéronef et comprenant des données mesurées d'un ou plusieurs composants de l'un ou les plusieurs dispositifs de système d'aéronef ;
la réception, par le dispositif d'interface d'aéronef (12) par le biais de la structure de bus de données (26) d'aéronef, des données distantes provenant d'un ou plusieurs dispositifs informatiques distants de l'aéronef et reçues au niveau de l'aéronef par le biais d'un ou plusieurs réseaux de communication sans fil ;
l'exécution, par le dispositif d'interface d'aéronef (12), d'un premier algorithme conditionnel qui comprend une première pluralité d'expressions conditionnelles qui sont logiquement organisées pour définir un premier déclencheur (50) qui déclenche une première action déclenchée (52A), la première pluralité d'expressions conditionnelles comprenant une première expression conditionnelle (48A-48C) sur la base des données de système d'aéronef provenant de l'un ou les plusieurs dispositifs de système d'aéronef et une seconde expression conditionnelle (48E-48F) sur la base des données distantes provenant du dispositif informatique distant de l'aéronef ;
la détermination, par le dispositif d'interface d'aéronef (12) pendant l'exécution du premier algorithme conditionnel, que le premier déclencheur (50) est satisfait ;
l'exécution, par le dispositif d'interface d'aéronef (12) en réponse à la détermination que le premier déclencheur (50) est satisfait, la première action déclenchée, la première action déclenchée comprenant au moins un parmi la transmission d'une alerte, la transmission d'un rapport et le stockage d'un rapport ; et
l'exécution, par le dispositif d'interface d'aéronef (12), d'un second algorithme conditionnel (54) qui comprend trois expressions conditionnelles :
1 : que le train est sorti et verrouillé (56A) ;
2 : que l'auto-manette est débrayée (56B) ; et
3 : que le premier déclencheur (50) est satisfait,
lesdites trois expressions conditionnelles (56A, 56B et 50) étant organisées par le biais d'un opérateur booléen ET pour définir un second déclencheur (58), dont la satisfaction déclenche une seconde action déclenchée (60), ladite seconde action déclenchée (60) étant de transmettre un message d'alerte ou/et un rapport à un dispositif informatique au sol par le biais de communications cellulaires.

10. Procédé selon la revendication 9,
dans lequel la première pluralité d'expressions conditionnelles comprend en outre une troisième expression conditionnelle (48D) sur la base d'une saisie d'utilisateur reçue par le biais d'un dispositif d'interface utilisateur (16) de l'aéronef.

11. Procédé selon la revendication 9 ou 10,
dans lequel le premier algorithme conditionnel comprend en outre un ou plusieurs attributs qui spécifient une action de fin de vie du premier algorithme conditionnel,
dans lequel l'action de fin de vie comprend une parmi une action de suppression qui provoque la suppression des premières instructions d'algorithme conditionnel de la mémoire lisible par ordinateur du dispositif d'interface d'aéronef (12) et une action dormante (12) qui amène le dispositif d'interface d'aéronef à s'abstenir d'exécuter le premier algorithme conditionnel jusqu'à réception d'un ordre d'activation.
